(19) Europäisches Patentamt
European Patent Office
Office européen des brevets

(11) **EP 4 607 618 A1**

(12) **EUROPEAN PATENT APPLICATION**
published in accordance with Art. 153(4) EPC

(43) Date of publication:
**27.08.2025 Bulletin 2025/35**

(21) Application number: **23912835.8**

(22) Date of filing: **22.12.2023**

(51) International Patent Classification (IPC):
*H01M 4/525* (2010.01)     *H01M 4/505* (2010.01)
*H01M 4/131* (2010.01)     *H01M 10/052* (2010.01)
*H01M 4/02* (2006.01)

(52) Cooperative Patent Classification (CPC):
**H01M 4/02; H01M 4/131; H01M 4/36; H01M 4/505;
H01M 4/525; H01M 10/052;** Y02E 60/10

(86) International application number:
**PCT/KR2023/021495**

(87) International publication number:
**WO 2024/144160 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.12.2022 KR 20220184868**

(71) Applicant: **LG Energy Solution, Ltd.
Seoul 07335 (KR)**

(72) Inventors:
  • **KIM, Seul Ki
    Daejeon 34122 (KR)**
  • **PARK, Sang Min
    Daejeon 34122 (KR)**

  • **KIM, Hyeong Il
    Daejeon 34122 (KR)**
  • **PARK, Byung Chun
    Daejeon 34122 (KR)**
  • **LEE, Sang Wook
    Daejeon 34122 (KR)**
  • **LHO, Eun Sol
    Daejeon 34122 (KR)**
  • **HWANG, Jin Tae
    Daejeon 34122 (KR)**
  • **OH, Su Yeon
    Daejeon 34122 (KR)**

(74) Representative: **Hoffmann Eitle
Patent- und Rechtsanwälte PartmbB
Arabellastraße 30
81925 München (DE)**

(54) **POSITIVE ELECTRODE ACTIVE MATERIAL, POSITIVE ELECTRODE COMPRISING SAME,
AND LITHIUM SECONDARY BATTERY**

(57)     The present invention relates to a positive electrode active material comprising a lithium nickel-based transition metal oxide in the form of secondary particles which are aggregates of primary particles, wherein, with respect to the cross-section at the point of 40% to 60% of the diameter of the secondary particles, the following are satisfied: a) the ratio of the number of primary particles having an aspect ratio of 1.6 or greater in the cross-section is 0.81 or greater; and b) a K value calculated by formula 1 below is 12 to 40. The positive electrode active material as characterized above may reduce particle cracking between cycles and thus may inhibit battery degradation and enhance stability. [Formula 1] $K = R_{AP} \times N_P / A_S$. Here, $R_{AP}$ is the average aspect ratio of the primary particles, $N_P$ is the number of primary particles, and $A_S$ is the cross-sectional area of the secondary particles.

[FIG. 1]

LGCHEM 1.0kV 5.0mm ×10.0k LA50(U)          5.00 μm

EP 4 607 618 A1

**Description**

**[Technical Field]**

CROSS-REFERENCE TO RELATED APPLICATIONS

This application claims the benefit of priority to Korean Patent Application No. 10-2022-0184868 filed on December 26, 2022, the disclosure of which is incorporated herein by reference in its entirety.

Technical Field

The present invention relates to a positive electrode active material for a lithium secondary battery, and a positive electrode and a lithium secondary battery including the same, and more specifically, to a positive electrode active material comprising a lithium nickel-based transition metal oxide in the form of a secondary particle that is an aggregate of primary particles, and a positive electrode and a lithium secondary battery including the same.

**[Background Art]**

A lithium secondary battery is generally composed of a positive electrode, a negative electrode, a separator, and an electrolyte, wherein the positive electrode and the negative electrode include an active material capable of intercalating and deintercalating lithium ions.

As a positive electrode active material for the lithium secondary battery, a lithium cobalt oxide ($LiCoO_2$), a lithium nickel oxide ($LiNiO_2$), a lithium manganese oxide ($LiMnO_2$, $LiMnO_4$, or the like), a lithium iron phosphate compound ($LiFePO_4$), etc. have been used. Among them, the lithium cobalt oxide has the advantages of high operating voltage and excellent capacity characteristics, but the price of cobalt, which is a raw material, is high and its supply is unstable, making it difficult to commercially apply it to a large-capacity battery. The lithium nickel oxide has poor structural stability, making it difficult to achieve sufficient lifespan characteristics. Meanwhile, the lithium manganese oxide has excellent stability, but has a problem of poor capacity characteristics. Therefore, in order to compensate for the problems of the lithium transition metal oxides containing Ni, Co, or Mn alone, lithium nickel-based transition metal oxides containing two or more transition metals have been developed, and in particular, a lithium nickel cobalt manganese oxide containing Ni, Co, and Mn are widely used in the field of electric vehicle batteries.

Recently, there has been an increasing demand for high-power and high-capacity batteries, such as batteries for electric vehicles, and accordingly, the nickel content in the positive electrode active material is gradually increasing. When the nickel content in the positive electrode active material increases, the initial capacity characteristics are improved, but a large amount of highly reactive $Ni^{+4}$ ions are generated during electrode rolling or during charging and discharging to cause structural collapse of the positive electrode active material. As a result, a surface side reaction is increased, and the positive electrode active material deteriorates at an increased rate, thereby degrading life characteristics and battery safety.

**[Disclosure]**

**[Technical Problem]**

The present invention is intended to solve the above problems and provide a positive electrode active material with enhanced durability by optimizing the shape of primary particles inside a secondary particle to suppress particle breakage and cracks during the electrode manufacturing and charging/discharging process.

In addition, the present invention is to provide a positive electrode and a lithium secondary battery with improved high-temperature lifespan characteristics and high-temperature output characteristics by including the above positive electrode active material.

**[Technical Solution]**

In order to solve the above problem, according to an aspect of the present invention, there is provided a positive electrode active material including a lithium nickel-based transition metal oxide in the form of a secondary particle, which is an aggregate of primary particles, wherein the following conditions a) and b) are satisfied for a cross-section at 40% to 60% of the diameter of the secondary particle:

a) a ratio of the number of primary particles having an aspect ratio of 1.6 or more in the above cross-section is 0.81 or more, and

b) a K value calculated by the following Equation 1 is 12 to 40:

$$[\text{Equation 1}]$$

$$K = R_{AP} \times N_P / A_S$$

wherein the $R_{AP}$ is an average aspect ratio of the primary particles, the $N_P$ is the number of primary particles, and the $A_S$ is a cross-sectional area of the secondary particle.

In order to solve the above problems, according to another aspect of the present invention, there is provided a positive electrode including the positive electrode active material according to the present invention.

In order to solve the above problems, according to still another aspect of the present invention, there is provided a lithium secondary battery including the positive electrode according to the present invention.

**[Advantageous Effects]**

The positive electrode active material for a lithium secondary battery according to the present invention includes a lithium nickel-based transition metal oxide having an optimized shape of primary particles in a secondary particle, thereby reducing particle breakage due to rolling during the manufacture of an electrode, crack generation rate in the active material particles in the process of charging and discharging, and the amount of fine powder generated, which leads to excellent durability.

In addition, the positive electrode active material for a lithium secondary battery according to the present invention can have high-temperature lifespan characteristics and high-temperature power characteristics by minimizing particle breakage and crack generation to reduce electrode surface side reactions and suppress the deterioration thereof.

**[Description of Drawings]**

FIG. 1 is a scanning electron microscope image of a cross section of a positive electrode active material particle produced in Example 1 according to the present invention.

FIG. 2 is a scanning electron microscope image of a cross section of a positive electrode active material particle produced in Comparative Example 1.

FIG. 3 is a scanning electron microscope image of a cross section of a positive electrode active material particle produced in Comparative Example 2.

**[Best** Modes **of the Invention]**

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

It should be understood that terms such as "comprise", "include", and "have" as used herein are intended to designate the presence of implemented features, numbers, steps, components, or combinations thereof, but not to preclude a possibility of existence or addition of one or more other features, numbers, steps, components, or combinations thereof.

In the present disclosure, a "secondary particle" refers to a particle formed by agglomerating tens to hundreds of primary particles. More specifically, the secondary particle is an agglomerate of 50 primary particles or more.

In the present disclosure, a "$D_{50}$" refers to a particle size based on 50% of a volume cumulative particle size distribution of a positive electrode active material powder. The average particle diameter $D_{50}$ can be measured using a laser diffraction method. For example, the positive electrode active material powder is dispersed in a dispersion medium, and then introduced into a commercially available laser diffraction particle size measurement device (e.g., Microtrac MT 3000) and irradiated with an ultrasonic wave of about 28 kHz with an output of 60 W. Thereafter, the average particle diameter can be determined by obtaining a volume cumulative particle size distribution graph, and then obtaining a particle size corresponding to 50% of the volume cumulative amount.

Hereinafter, the present invention will be described in more detail.

Positive Electrode Active Material

A positive electrode active material according to the present invention includes a lithium nickel-based transition metal oxide in the form of a secondary particle, which is an aggregate of primary particles, wherein for a cross-section at 40% to 60% of the diameter of the secondary particle, a) a ratio of the number of primary particles having an aspect ratio of 1.6 or more in the above cross-section is 0.81 or more, and b) a K value calculated by the following Equation 1 is 12 to 40:

$$[\text{Equation 1}]$$

$$K = R_{AP} \times N_P / A_S$$

wherein the $R_{AP}$ is an average aspect ratio of the primary particles, the $N_P$ is the number of primary particles, and the $A_S$ is a cross-sectional area of the secondary particle.

According to an embodiment of the present invention, the lithium nickel-based transition metal oxide included in the positive electrode active material is characterized by satisfying the conditions of a) and b) above in a cross-section based on 40% to 60% of the diameter of the secondary particle.

In the present specification, the characteristics obtained from the cross section of the lithium nickel-based transition metal oxide are values obtained by photographing the cross section of the oxide particles cut through ion milling with a field emission scanning electron microscope and analyzing it through an image analysis program.

The condition a) means that in the primary particles on the cross-section of the secondary particle, the number of the primary particles having an aspect ratio of 1.6 or more has a ratio of 0.81 or more to the number of the total primary particles. That is, 81% or more of the primary particles have an aspect ratio of 1.6 or more, which may mean that it is desirable that the proportions of the primary particles having a thin and long shape are high. Preferably, the number ratio may be 0.82 or more, 0.83 or more, 0.84 or more, or 0.85 or more.

In addition, the condition b) means that the K value represented by Equation 1 has a range of 12 to 40, and preferably, the K value may be 15 or more, 17 or more, or 20 or more, and 35 or less, 32 or less, or 28 or less. The K value is a ratio of the product of the aspect ratio and the number of primary particles to the cross-sectional area of the secondary particles. The lower limit of the K value may mean that when the aspect ratio of the primary particles is the same, it is more preferable that a larger number of primary particles exist compared to the area, and when the number is the same, it is preferable that the aspect ratio is larger. The upper limit may mean that the aspect ratio and the number of the particles should be at an appropriate level compared to the area, and when they exceed the appropriate level, particle breakage and cracking may occur.

On the other hand, the positive electrode active material in the form of secondary particles has a shape in which primary particles are aggregated, and its performance may be determined according to the arrangement of the primary particles, the crystal direction of the primary particles, etc. Among them, the arrangement of the primary particles may have a greater influence than the crystal direction of the primary particles, because the grain boundary between the primary particles is a region where lithium ions or electrons move at a high speed; the more grain boundaries are formed due to the larger number of primary particles, the better the performance is, but on the contrary, cracks are easily generated; and the grain boundary is an area with the highest possibility of a side reaction with an electrolyte. Accordingly, the performance of the positive electrode active material, that is, the performance of the lithium secondary battery, may be determined according to the arrangement of the primary particles.

Specifically, it is preferable that the primary particles have a large aspect ratio. When the number of primary particles in the cross-sectional area of the secondary particles is large, there is ambivalence in that the mobility of lithium ions and electrons can be improved due to a large number of grain boundaries as mentioned above, but on the contrary, the possibility of cracking and side reactions is increased. Accordingly, in consideration of these characteristics, the present inventors intend to solve the problems as described above by defining a ratio of the number of primary particles having a specific aspect ratio or more present on the cross-section of the secondary particles, and a ratio of the product of the aspect ratio and the number of the primary particles to a cross-sectional area of the secondary particles.

According to an embodiment of the present invention, the lithium nickel-based transition metal oxide may further satisfy a condition that a ratio of a primary particle short diameter ($D_S$) to a $D_{50}$ of the secondary particles is 0.025 or less in a cross-section based on 40% to 60% of the diameter of the secondary particle.

When the ratio ($D_S/D_{50}$) of the short diameter ($D_S$) of the primary particle to the $D_{50}$ of the secondary particle is 0.025 or less, the primary particle may have a slender shape, and an appropriate level of size, and the primary particles in the cross-section of the secondary particle may exist in an appropriate number. The ratio of the short diameter of the primary particle to the $D_{50}$ of the secondary particle may be preferably 0.023 or less, or 0.020 or less. The lower limit may be controlled by the K value, and may be preferably 0.010 or more, 0.012 or more, or 0.013 or more.

In addition, the lithium nickel-based transition metal oxide may further satisfy a condition that a ratio ($D_L/D_{50}$) of a long diameter ($D_L$) of the primary particles to a $D_{50}$ of the secondary particles is 0.035 to 0.075. This may mean that it is desirable for the primary particle to have a long shape, and in the case of the above range, the primary particles may have such shape and exist in an appropriate number. Accordingly, preferably, the ratio may be 0.035 or more, 0.038 or more, 0.040 or more, 0.045 or more, 0.050 or more, or 0.055 or more, and 0.070 or less, 0.065 or less, or 0.063 or less.

According to an embodiment of the present invention, the average aspect ratio of the primary particles in the secondary particles may be 2.0 to 3.5. There is a condition that the ratio of the number of the primary particles having an aspect ratio of 1.6 or more to the total is 0.81 or more, but when the overall average value satisfies the range of 2.0 to 3.5, it is possible to contribute to the optimization of the shape of the primary particles, which can effectively achieve the technical purpose of improving durability. The average aspect ratio may be 2.1 or more, 2.2 or more, 2.3 or more, or 2.4 or more, and 3.3 or less, 3.2 or less, or 3.0 or less.

Meanwhile, according to one example of the present invention, the lithium nickel-based transition metal oxide may have a crystal strain of the secondary particle of $670 \times 10^{-6}$ or less. The crystal strain of the secondary particle represents a degree of deformation of the crystal lattice, and when the degree of deformation of the crystal lattice is large, it means that structural stability is low. When the above range is not satisfied, the structure may easily collapse during electrode rolling or cycle, thereby causing electrode degradation, and thus, high-temperature lifespan and output characteristics may be poor. In addition, the positive electrode including such a positive electrode active material has an initial efficiency below a specific range, whereby there is a problem in that a difference in rate characteristics from the negative electrode occurs, thereby causing a lithium plating phenomenon in which lithium is deposited on the surface of the negative electrode, and reducing energy density. Accordingly, the above crystal strain may be preferably $660 \times 10^{-6}$ or less, $655 \times 10^{-6}$ or less, $650 \times 10^{-6}$ or less, or $645 \times 10^{-6}$ or less.

According to one embodiment of the present invention, the lithium nickel-based transition metal oxide may have a $D_{50}$ of 7.0 μm to 20.0 μm. Preferably, it may be 8.0 μm or more, 9.0 μm or more, 9.5 μm or more, or 10.0 μm or more, and 19.0 μm or less, 18.0 μm or less, 16.0 μm or less, 15.0 μm or less, or 14.0 μm or less. When the $D_{50}$ of the secondary particle satisfies the above range, life characteristics can be improved, and output can be improved due to excellent lithium mobility and thus improved resistance characteristics.

Meanwhile, the positive electrode active material according to the present invention may include a lithium nickel-based transition metal oxides, and specifically, a lithium nickel-based transition metal oxide having a composition shown in Chemical Formula 1 below:

[Chemical Formula 1] $\qquad$ $Li_{1+x}Ni_aCo_bM^1_cM^2_dO_{2-e}X_e$

Wherein;

$M^1$ includes one or more selected from Mn and Al; $M^2$ includes one or more selected from the group consisting of W, Zr, Y, Ba, Ca, Ti, V, Mg, Ta and Nb; X includes one or more selected from the group consisting of N, P, S, F and Cl; and $0 \leq x \leq 0.5$, $0.6 \leq a < 1.0$, $0 < b \leq 0.4$, $0 < c \leq 0.4$, $0 \leq d \leq 0.05$ and $0 \leq e \leq 0.05$.

In Formula 1 above, $M^1$ may include Mn, Al or a combination thereof, preferably Mn, or a combination of Mn and Al; and $M^2$ may include at least one selected from the group consisting of Zr, W, Y, Ba, Ca, Ti, Mg, Ta, and Nb, and preferably at least one selected from the group consisting of Zr, Y, Mg, and Ti, and more preferably Zr, Y, or a combination thereof. The $M^2$ element is not necessarily included, but when included in an appropriate amount, it can play a role in promoting grain growth during calcination or improving crystal structure stability. In addition, X is an anion substituted for the oxygen site and may include N, P, S, F, or Cl.

The 1+x represents a molar ratio of lithium in the lithium nickel-based transition metal oxide, and may be $0 \leq x \leq 0.50$, $0 \leq x \leq 0.20$, $0 \leq x \leq 0.15$ or $0 \leq x \leq 0.10$.

The a represents a molar ratio of nickel among all metals except lithium in the lithium nickel-based transition metal oxide, and may be $0.60 \leq a < 1.00$, $0.65 \leq a < 1.00$, $0.70 \leq a \leq 0.99$, $0.75 \leq a \leq 0.99$ or $0.80 \leq a \leq 0.99$, $0.82 \leq a \leq 0.99$, $0.84 \leq a \leq 0.99$ or $0.86 \leq a \leq 0.99$.

The b represents a molar ratio of cobalt among all metals excluding lithium in the lithium nickel-based transition metal oxide, and may be $0 < b \leq 0.40$, $0 < b \leq 0.30$, $0.01 \leq b \leq 0.25$, $0.01 \leq b \leq 0.20$, or $0.01 \leq b \leq 0.15$.

The c represents a molar ratio of $M^1$ among all metals excluding lithium in the lithium nickel-based transition metal oxide, and may be $0 < c \leq 0.40$, $0 < c \leq 0.30$, $0.01 \leq c \leq 0.25$, $0.01 \leq c \leq 0.20$, or $0.01 \leq c \leq 0.15$.

The d represents a molar ratio of $M^2$ element among all metals excluding lithium in the lithium nickel-based transition metal oxide, and may be $0 \leq d \leq 0.05$, $0 \leq d \leq 0.02$ or $0 \leq d \leq 0.01$.

The e represents a molar ratio of element X among all non-metals excluding oxygen in the lithium nickel-based transition metal oxide, and may be $0 \leq e \leq 0.05$, $0 \leq e \leq 0.02$, or $0 \leq e \leq 0.01$.

### Method of Manufacturing Positive Electrode Active Material

Next, a method of manufacturing the positive electrode active material powder of the present invention will be described.

The method of manufacturing the positive electrode active material powder according to the present invention includes the steps of: (S1) preparing a positive electrode active material precursor by adding a transition metal-containing solution containing cations of nickel (Ni), cobalt (Co) and $M^1$, a basic aqueous solution, and an ammonium solution and performing a coprecipitation reaction; and (S2) preparing a positive electrode active material powder by mixing the positive electrode active material precursor and a lithium raw material and heat-treating them.

In addition, the produced positive electrode active material includes a lithium nickel-based transition metal oxide in the form of a secondary particle in which tens to hundreds of primary particles are gathered to form an aggregate.

Hereinafter, each step of the method of manufacturing the positive electrode active material powder will be described in detail.

First, the transition metal-containing solution containing cations of nickel (Ni), cobalt (Co), and $M^1$ is prepared. For example, the transition metal-containing solution may include a nickel-containing raw material, a cobalt-containing raw material, and an $M^1$-containing raw material, wherein the $M^1$-containing raw material may be a manganese-containing raw material and/or an aluminum-containing raw material.

Thereafter, the positive electrode active material precursor can be prepared by adding an ammonium cation-containing complex forming agent and a basic aqueous solution to the transition metal solution and performing a coprecipitation reaction.

The nickel-containing raw material may be, for example, a nickel-containing acetate, nitrate, sulfate, halide, sulfide, hydroxide, oxide, oxyhydroxide, or the like, and specifically, $Ni(OH)_2$, $NiO$, $NiOOH$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, fatty acid nickel salt, nickel halide, or a combination thereof, but is not limited thereto.

The cobalt-containing raw material may be a cobalt-containing acetate, nitrate, sulfate, halide, sulfide, hydroxide, oxide, oxyhydroxide, or the like, and specifically, $Co(OH)_2$, $CoOOH$, $Co(OCOCH_3)_2 \cdot 4H_2O$, $Co(NO_3)_2 \cdot 6H_2O$, $CoSO_4$, $C_O(SO_4)_2 \cdot 7H_2O$, or a combination thereof, but is not limited thereto.

The manganese-containing raw material may be, for example, a manganese-containing acetate, nitrate, sulfate, halide, sulfide, hydroxide, oxide, oxyhydroxide, or a combination thereof, and specifically, a manganese oxide such as $Mn_2O_3$, $MnO_2$, $Mn_3O_4$, etc.; a manganese salt such as $MnCO_3$, $Mn(NO_3)_2$, $MnSO_4$, manganese acetate, dicarboxylic acid manganese salt, manganese citrate, fatty acid manganese salt; a manganese oxyhydroxide, manganese chloride, or a combination thereof, but is not limited thereto.

The aluminum-containing raw material may be, for example, $Al_2O_3$, $Al(OH)_3$, $Al(NO_3)_3$, $Al_2(SO_4)_3$, $(HO)_2AlCH_3CO_2$, $HOAl(CH_3CO_2)_2$, $Al(CH_3CO_2)_3$, aluminum halides, or a combination thereof.

The transition metal-containing solution can be prepared by adding the nickel-containing raw material, cobalt-containing raw material, and $M^1$-containing raw material to a solvent, specifically water, or a mixed solvent of organic solvents (e.g. alcohol, etc.) that can be mixed uniformly with water, or by mixing an aqueous solution of the nickel-containing raw material, an aqueous solution of the cobalt-containing raw material, and the $M^1$-containing raw material.

The ammonium cation-containing complex forming agent may be, for example, $NH_4OH$, $(NH_4)_2SO_4$, $NH_4NO_3$, $NH_4Cl$, $CH_3COONH_4$, $NH_4CO_3$, or a combination thereof, but is not limited thereto. Meanwhile, the ammonium cation-containing complex former may be used in the form of an aqueous solution, wherein the solvent may be water, or a mixture of water and an organic solvent (specifically, alcohol, etc.) that is uniformly miscible with water.

The basic compound may be a hydroxide of an alkali metal or alkaline earth metal, such as $NaOH$, $KOH$, or $Ca(OH)_2$, a hydrate thereof, or a combination thereof. The basic compound may also be used in the form of an aqueous solution, wherein the solvent may be water, or a mixture of water and an organic solvent (specifically, alcohol, etc.) that is uniformly miscible with water.

The basic compound is added to adjust the pH of the reaction solution, and may be added in an amount such that the pH of the metal solution is 8 to 12.

The coprecipitation reaction may be performed at a temperature ranging from 35°C to 80°C under an inert atmosphere such as nitrogen or argon.

Accordingly, the positive electrode active material precursor containing cations of nickel, cobalt, and $M^1$ can be prepared.

Through the above process, positive electrode active material precursor particles of nickel-cobalt-$M^1$ hydroxide are produced and precipitated in the reaction solution. By controlling the concentrations of the nickel-containing raw material, cobalt-containing raw material and $M^1$-containing raw material, the positive electrode active material precursor can be prepared in which the nickel (Ni) content of the total metal content is 60 mol% or more, 65 mol% or more, 70 mol% or more, 75 mol% or more, and preferably 80 mol% or more, more preferably 82 mol% or more. The precipitated positive electrode active material precursor particles can be separated and dried according to a conventional method to produce the positive electrode active material precursor.

The temperature, time, input amount and order of raw materials, additives used together, and pH of the coprecipitation reaction may be appropriately controlled, thereby preparing a positive electrode active material according to an embodiment of the present invention, and allowing the shape and arrangement of the primary particles in the secondary particle to be formed as desired.

Thereafter, the positive electrode active material precursor and the lithium raw material are mixed, and heat treated.

The lithium raw material may be lithium-containing sulfate, nitrate, acetate, carbonate, oxalate, citrate, halide, hydroxide, or oxyhydroxide, but is not particularly limited as long as it is soluble in water. Specifically, the lithium raw material may be $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$, $Li_2O$, $Li_2SO_4$, $CH_3COOLi$, or $Li_3C_6H_5O_7$, and any one or a mixture of two or more thereof may be used.

The positive electrode active material precursor and the lithium raw material may be mixed at a molar ratio of 1:1 to 1:1.1. The positive electrode active material precursor and the lithium raw material may be mixed, for example, at a molar ratio of about 1:1, about 1:1.02, about 1:1.05, about 1:1.07, or about 1:1.10, but are not limited thereto.

The heat treatment may be performed at a temperature ranging from 750°C to 1000°C in the case of a high-Ni NCM-based lithium composite transition metal oxide with a nickel (Ni) content of 60 mol% or more. The heat treatment may be preferably performed, for example, at a temperature ranging from 800°C to 925°C, and more preferably at a temperature ranging from 850°C to 910°C.

Accordingly, the manufactured positive electrode active material can have reduced particle breakage and strain in the crystal structure during the rolling process or charging and discharging of a lithium secondary battery including the same, and can have improved initial resistance characteristics.

The heat treatment may be performed under an air or oxygen atmosphere, for example, for 4 to 12 hours. Specifically, the heat treatment may be performed, for example, for 4 hours or more, 6 hours or more, 8 hours or more, 10 hours or more, and for 12 hours or less, 10 hours or less, 8 hours or less, and 6 hours or less.

The firing process may be performed by dividing it into primary firing and secondary firing, and may be appropriately controlled according to the nickel content at a temperature within the above-described range, wherein the firing time may be appropriately controlled according to the shape or structure of the positive electrode active material to be prepared. Through the control of such firing process conditions, the positive electrode active material according to one embodiment of the present invention can be prepared.

Meanwhile, when the lithium nickel-based transition metal oxide containing $M^2$ metal is to be prepared, $M^2$ metal-containing raw materials may be additionally mixed during the coprecipitation reaction or in the firing step. In this case, the $M^2$ metal-containing raw material may be an acetate, carbonate, nitrate, sulfate, halide, sulfide, or oxide of the $M^2$ metal.

On the other hand, when it is desired to form a coating layer on the surface of the lithium nickel-based transition metal oxide, after the above heat treatment, a step of mixing the lithium nickel-based transition metal oxide prepared through the heat treatment and the coating raw material and then heat treating them may be further performed. In this case, the mixing may be accomplished by solid-phase mixing or liquid-phase mixing, and the heat treatment may be performed at an appropriate temperature depending on the coating raw material. For example, the heat treatment of the coating process may be performed at a temperature ranging from 200°C to 700°C, or 300°C to 600°C, but is not limited thereto.

**Positive Electrode**

The positive electrode according to the present invention includes the positive electrode active material powder of the present invention described above. Specifically, the positive electrode includes a positive electrode current collector and a positive electrode active material layer formed on the positive electrode current collector, wherein the positive electrode active material layer includes the positive electrode active material powder according to the present invention. Since the positive electrode active material powder has been described above, a detailed description thereof will be omitted, and only the remaining components will be described in detail below.

The positive electrode current collector may include a highly conductive metal, and is not particularly limited as long as the positive electrode active material layer can be easily adhered thereto and is non-reactive within the voltage range of the battery. The positive electrode current collector may be, for example, stainless steel, aluminum, nickel, titanium, heat-treated carbon, or aluminum or stainless steel having a surface treated with carbon, nickel, titanium, silver, etc. Additionally, the positive electrode current collector may typically have a thickness of 3 to 500 $\mu$m, and may have fine irregularities formed on the surface of the current collector to increase the adhesion of the positive electrode active material. For example, it may be used in various forms such as a film, a sheet, a foil, a net, a porous body, a foam, a non-woven fabric, or the like.

The positive electrode active material layer, along with the positive electrode active material powder, may optionally include a conductive material and a binder, if necessary.

In this case, the positive electrode active material powder may be included in an amount of 80% to 99% by weight, more specifically 85% to 98.5% by weight, based on the total weight of the positive electrode active material layer, and can exhibit excellent capacity characteristics when included in the above content range.

The conductive material is used to impart conductivity to the electrode, and may be any material without particular limitation as long as it has electroconductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, and carbon fiber; a powder or fiber of metal such as copper, nickel, aluminum, silver, etc.; a conductive tube such as carbon nanotube; a conductive whisker such as a zinc oxide whisker and a potassium titanate whisker; a conductive metal oxide such as a titanium oxide; or a conductive polymer such as a polyphenylene derivative, and any one or a mixture of two or more thereof may be used. The conductive material may be included in an amount of 0.1 to 15% by weight based on the total weight of the positive electrode active material layer.

The binder serves to improve the bonding between the positive electrode active material particles and the adhesion between the positive electrode active material and the current collector. Specific examples thereof may include polyvinylidene fluoride (PVDF), polyvinylidene fluoride-hexafluoropropylene copolymer (PVDF-co-HFP), polyvinyl alcohol, polyacrylonitrile, polymethyl methacrylate, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber (SBR), fluorine rubber, polyacrylic acid, the polymers in which hydrogen is substituted with Li, Na, or Ca, or various copolymers thereof, and any one or a mixture of two or more thereof may be used. The binder may be included in an amount of 0.1 to 15% by weight based on the total weight of the positive electrode active material layer.

The positive electrode may be manufactured according to a conventional positive electrode manufacturing method except for the use of the positive electrode active material powder described above. Specifically, the above positive electrode active material powder and, if necessary, a binder, a conductive material, and a dispersant are dissolved or dispersed in a solvent to prepare a positive electrode slurry composition. This slurry composition can be applied on a positive electrode current collector, and then dried and rolled to produce a positive electrode.

The solvent may be any solvent commonly used in the art, for example, dimethyl sulfoxide (DMSO), isopropyl alcohol, N-methyl pyrrolidone (NMP), dimethylformamide (DMF), acetone, water, or the like, and any one or a mixture of two or more thereof may be used. The solvent may be used in an amount sufficient to dissolve or disperse the positive electrode active material, conductive material, binder and dispersant in consideration of the application thickness of the slurry and the manufacturing yield, and to allow the slurry to have a viscosity capable of exhibiting excellent thickness uniformity when applied for the subsequent positive electrode production.

Alternatively, the positive electrode may be manufactured by casting the positive electrode slurry composition on a separate support, peeling a film from the support, and then laminating the film on a positive electrode current collector.

## Electrochemical Device (Lithium Secondary **Battery)**

Next, an electrochemical device according to the present invention will be described. The electrochemical device according to the present invention includes the positive electrode of the present invention described above. Specifically, the electrochemical device may be a battery, a capacitor, etc., and more specifically, a lithium secondary battery.

Specifically, the lithium secondary battery includes a positive electrode, a negative electrode positioned opposite the positive electrode, and a separator and electrolyte interposed between the positive electrode and the negative electrode. Since the positive electrode is the same as described above, a detailed description thereof is omitted, and only the remaining components will be described in detail below.

In addition, the lithium secondary battery may optionally further include a battery container for accommodating an electrode assembly formed of the positive electrode, negative electrode, and separator, and a sealing member for sealing the battery container.

In the lithium secondary battery, the negative electrode includes a negative electrode current collector and a negative electrode active material layer disposed on the negative electrode current collector.

The negative electrode current collector is not particularly limited as long as it has a high conductivity without causing a chemical change in a battery, and may be, for example, copper, stainless steel, aluminum, nickel, titanium, heat-treated carbon, copper or stainless steel that is surface-treated with carbon, nickel, titanium, silver, or the like, an aluminum-cadmium alloy, or the like. Additionally, the negative electrode current collector may typically have a thickness of 3 to 500 $\mu$m, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

The negative electrode active material layer optionally includes a binder and a conductive material along with the negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic material alloyable with lithium, such as Si, Al, Sn, Pb, Zn, Bi, In, Mg, Ga, Cd, an Si alloy, an Sn alloy, or an Al alloy; a metal oxide capable of doping and dedoping lithium, such as $SiO_\beta$ ($0<\beta<2$), $SnO_2$, vanadium oxide, and lithium vanadium oxide; or a composite including the metallic material and the carbonaceous material, such as an Si-C composite or an Sn-C composite, and any one or a mixture of two or more thereof may be used. Also, a metal lithium thin film may also be used as the negative electrode active material. Additionally, as the carbon material, low crystalline carbon, high crystalline carbon, or the like may all be used. Representative examples of the low crystalline carbon may include soft carbon and hard carbon, and representative examples of the high crystalline carbon may include amorphous, plate-shaped, flaky, spherical, or fibrous natural graphite or artificial graphite, Kish graphite, pyrolytic carbon, mesophase pitch-based carbon fiber, meso-carbon microbeads, mesophase pitches, and high-temperature heat-treated carbon such as petroleum or coal tar pitch derived cokes.

The negative electrode active material may be included in an amount of 80% to 99% by weight based on the total weight of the negative electrode active material layer.

The binder is a component that assists in bonding between the conductive material, the active material, and the current collector, and is usually added in an amount of 0.1% to 10% by weight based on the total weight of the negative electrode active material layer. Examples of such binders include polyvinylidene fluoride (PVDF), polyvinyl alcohol, carboxymethylcellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber, nitrile-butadiene rubber, fluorine rubber, and various copolymers thereof.

The conductive material is a component to further improve the conductivity of the negative electrode active material, and may be added in an amount of 10% by weight or less, preferably 5% by weight or less, based on the total weight of the negative electrode active material layer. The conductive material is not particularly limited as long as it has conductivity without causing a chemical change in the battery, and may be, for example, graphite such as natural graphite or artificial graphite; carbon black such as acetylene black, Ketjen black, channel black, furnace black, lamp black, and thermal black; conductive fibers such as carbon fiber and metal fiber; fluorinated carbon; metal powder such as aluminum powder and nickel powder; conductive whiskers such as zinc oxide and potassium titanate; conductive metal oxides such as titanium oxide; conductive materials such as polyphenylene derivatives.

The negative electrode active material and optionally a binder and a conductive material are dissolved or dispersed in a solvent to prepare a negative electrode slurry composition, which may be applied on a negative electrode current collector and dried to produce a negative electrode active material layer. Alternatively, the negative electrode active material layer may be manufactured by casting the negative electrode slurry composition on a separate support, peeling a film from the support, and then laminating the film on a negative electrode current collector.

Meanwhile, in the lithium secondary battery, the separator is to separate the negative electrode and the positive electrode, and to provide a passage for lithium ions to move. Any separator may be used without particular limitation as long as it is generally used as a separator in a lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multi-layer structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten inorganic electrolyte, or the like which may be used in the preparation of a lithium secondary battery, but is not limited thereto.

Specifically, the electrolyte may include an organic solvent and a lithium salt.

As the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; nitriles such as R-CN (R is a straight, branched or cyclic C2-C20 hydrocarbon group, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable.

The lithium salt may be any compound without particular limitation as long as it can provide lithium ions used in a lithium secondary battery. Specifically, the anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, and the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, $LiB(C_2O_4)_2$, or the like. The lithium salt is preferably used at a concentration ranging from 0.1 to 2.0 M. When the concentration of the lithium salt is within the above range, the electrolyte has an appropriate conductivity and viscosity, whereby excellent electrolyte performance can be exhibited, and lithium ions can effectively move.

In order to improve the lifespan characteristics of the battery, suppress a reduction in battery capacity and improve discharge capacity of the battery, the electrolyte may further include, in addition to the above electrolyte components, one or more additives, for example, a halo-alkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride. In this case, the additives may be included in an amount of 0.1% to 5% by weight based on the total weight of the electrolyte.

Example

Hereinafter, examples of the present invention will be described in detail so that those skilled in the art can easily implement the present invention. However, the present invention may be embodied in a variety of forms and is not limited to the examples described herein.

Example 1

4 liters of distilled water were put into a coprecipitation reactor having a capacity of 20 L, which was then maintained at a temperature of 50°C, while continuously adding to the reactor a transition metal solution having a concentration of 3.2 mol/L in which $NiSO_4$, $CoSO_4$, and $MnSO_4$ were mixed such that a molar ratio of nickel:cobalt:manganese was 0.83:0.11:0.06 at 300 mL/hr, and 28 wt% of an aqueous ammonia solution at 42 mL/hr. The stirring speed of the impeller was set to 400 rpm, and 40 wt% of sodium hydroxide solution was added to maintain the pH of 9.3. Then, a coprecipitation reaction was carried out for 10 hours to form precursor particles, which were separated and washed, and then dried in an oven at 130°C to prepare a precursor (tap density: 1.8 g/cc).

The $Ni_{0.83}Co_{0.11}Mn_{0.06}(OH)_2$ precursor synthesized by the coprecipitation reaction was mixed with LiOH such that a molar ratio of Li/Me(Ni+Co+Mn) was 1.05, and heat-treated at 870°C under an oxygen atmosphere for 10 hours to prepare a positive electrode active material having a composition of $LiNi_{0.83}Co_{0.11}Mn_{0.06}O_2$.

**Examples 2 to 4 and Comparative Examples 1 to 4**

A positive electrode active material having particle size characteristics as shown in Table 1 below were prepared.

**Experimental Example 1: Measurement of Characteristics of Positive Electrode Active Material**

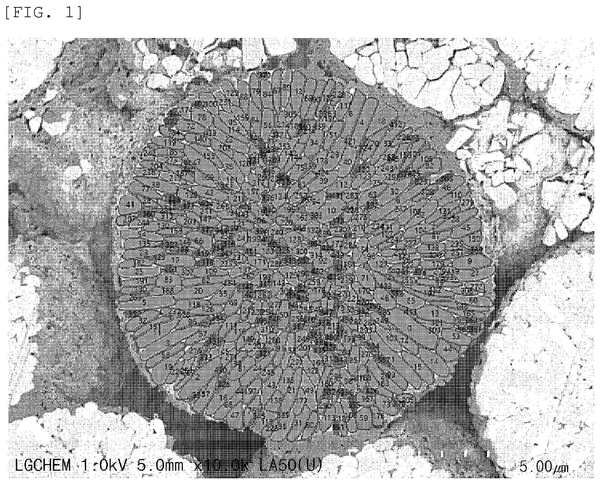

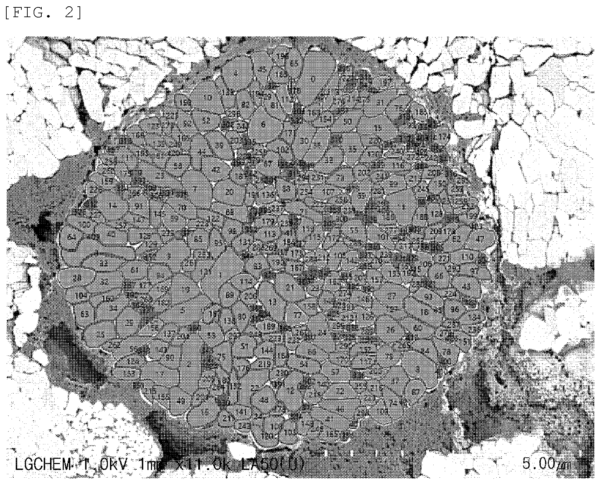

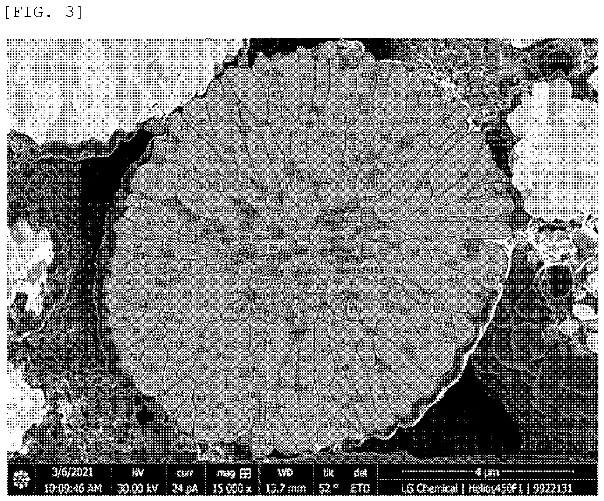

**1)Particle characteristics on cross-section of positive electrode active material:** For each positive electrode active material prepared in the above examples and comparative examples, an image of a particle cross-section at about 50% of the diameter was obtained under conditions of an accelerated voltage of 30 kV, a current of 24 pA, a working distance of 13 mm, and a magnification of 12,000 to 15,000 times in a SIM (scanning ion microscope) / ETD (Everyhart-Thornley SE detector) mode using an analysis equipment Dual Beam-FIB (Helios 450 F1/FEI) through Ar ion milling. Thereafter, the average of the cross-sectional area (AS) of the secondary particle, the long diameter $(D^1_{max})$ and the short diameter $(D^1_{min})$ of the primary particle was derived using an image analysis program, the number $(N_p)$ was analyzed, the aspect ratio (R) of each primary particle and the average thereof were analyzed, and the K value was calculated through the following Equation 1 and listed in Table 1 below. For the reliability of the data, the above characteristics were analyzed for 50 particles, and the average values thereof were used. Representatively, cross-sectional photographs of Example 1 and Comparative Examples 1 and 2 are shown in FIGS. 1 to 3.

[Equation 1]

$$K = R_{AR} \times N_P / A_S$$

wherein the $R_{AR}$ is an average aspect ratio of the primary particles, the $N_P$ is the number of primary particles, and the $A_S$ is a cross-sectional area of the secondary particle.

**2)Particle Size Characteristics of Positive Electrode Active Material:** 0.005 g of each positive electrode active material prepared in the above examples and comparative examples was dispersed in $H_2O$ as a dispersion medium, and then introduced into a commercially available laser diffraction particle size measuring device (PSD, Malvern, Mastersizer 3000) and irradiated with an ultrasonic wave at about 28 kHz at an output of 60 W to obtain a volume cumulative particle size distribution graph of each positive electrode active material. This graph was used to measure $D_{50}$ of the secondary particles, and the results are shown in Table 1 below.

**3)Crystal Strain:** XRD data obtained by X-ray diffraction analysis of the positive electrode active material powder were measured by analyzing it by Rietveld refinement method. In this case, the above X-ray diffraction analysis was performed under the conditions of step size = 0.02°, and total scan time = about 20 minutes for FDS 0.5°, $2\theta = 15° \sim 90°$ region after putting a sample in the groove of a general powder holder using a Bruker D8 Endeavor equipped with a LynxEye XE-T-position sensitive detector (light source: Cu-K$\alpha$, $\lambda = 1.54$Å), making the sample surface even using a slide glass, and filling the sample such that the height thereof coincides with the edge of the holder. For the measured data, Rietveld refinement was performed in consideration of charge at each site (metals at the transition metal site are +3, Ni at the Li site is +2) and cation mixing. Specifically, when analyzing the crystal strain, an instrumental broadening used the FPA (Fundamental Parameter Approach) implemented in the Bruker TOPAS program, and all peaks of the measurement range were used in fitting. The peak shape was fitted using only Lorenzian contribution as FP (First Principle) among the peak types available in TOPAS.

**4) Rate of Fine Powder Generated (% by volume):** For the above examples and comparative examples, the increase rate of fine powder was calculated for an area of 1 $\mu$m or less by applying a pressure of 6 tons to the positive electrode active material using a rolling density meter (Carver Pellet Press) and rolling it, and then using the value obtained from the particle size analysis (PSD).

[Table 1]

| | $D^1_{max}/D^2_{50}$ | $D^1_{min}/D^2_{50}$ | $R_{AR}$ | $N_P/A_S$ | K | Crystal strain $(\times 10^{-6})$ | Ratio of the number of primary particles with an AR of 1.6 or higher | Rate of Fine Powder Generated (% by volume) |
|---|---|---|---|---|---|---|---|---|
| Example 1 | 0.062 | 0.021 | 2.8 | 7.6 | 21.3 | 642.3 | 0.85 | 7.2 |
| Example 2 | 0.045 | 0.019 | 2.5 | 10.5 | 26.3 | 644.1 | 0.86 | 6.9 |
| Example 3 | 0.056 | 0.023 | 2.3 | 6.9 | 15.9 | 658.9 | 0.82 | 5.5 |
| Example 4 | 0.042 | 0.018 | 2.4 | 13.2 | 31.7 | 667.3 | 0.83 | 7.3 |
| Comparative Example 1 | 0.050 | 0.031 | 1.7 | 6.0 | 10.2 | 692.2 | 0.54 | 8.5 |
| Comparative Example 2 | 0.083 | 0.032 | 2.7 | 4.5 | 12.2 | 646.5 | 0.80 | 6.4 |
| Comparative Example 3 | 0.030 | 0.010 | 2.4 | 19.1 | 45.8 | 757.5 | - | 10.1 |
| Comparative Example 4 | 0.041 | 0.015 | 1.9 | 9.5 | 18.1 | 648.6 | 0.71 | 9.8 |

Referring to Table 1 above, it was confirmed that compared to Examples 1 to 4, Comparative Examples 1 to 4 did not satisfy the K value in the range of 12 to 40, and the ratio of the number of primary particles having an aspect ratio of 1.6 or higher is also small.

**<Manufacturing of Lithium Secondary Batteries>**

The positive electrode active material prepared in Examples 1 to 4 and Comparative Examples 1 to 4, a carbon black conductive material, and a PVDF binder were mixed in N-methyl pyrrolidone at a weight ratio of 95:2:3 to prepare a positive electrode slurry. The positive electrode slurry was coated on one surface of an aluminum current collector, dried at 130°C, and rolled to prepare a positive electrode.

Graphite as a negative electrode active material, super C as a conductive material, and SBR/CMC as a binder were mixed at a weight ratio of 95.6:1.0:3.4 to prepare a negative electrode slurry, which was coated on one surface of a copper current collector, dried at 130°C, and rolled to prepare a negative electrode.

A separator was interposed between the positive electrode and the negative electrode to prepare an electrode assembly, which was located inside a battery case. Thereafter, an electrolyte was injected into the case to prepare a lithium secondary battery. The electrolyte was prepared by dissolving $LiPF_6$ at a concentration of 1M in a mixed organic solvent in which ethylene carbonate/dimethyl carbonate/diethyl carbonate were mixed at a volume ratio of 1:2:1, and adding 2 wt% of vinylene carbonate (VC).

**Experimental Example 2: Measurement of the Performance of Positive Electrode Active Material**

**1) High-temperature performance:** The lithium secondary battery manufactured as described above was charged and discharged for 200 cycles at a temperature of 45°C under a condition of 0.33C/0.33C, and then the capacity retention rate (%) of a monocell was measured as a charge/discharge efficiency. When evaluating lifespan under the above methods and conditions, the resistance was calculated using the voltage and current during discharge ($(V_0-V_1)/I$, where $V_0$ is a discharge start voltage, $V_1$ is a voltage after 10 seconds of discharge, and I is an applied current), and the resistance increase rate was calculated using the post-cycle resistance compared to the initial resistance. The results are shown in Table 3 below.

**2) Difference in crack area before and after deterioration (%):** For the above positive electrode, the cross section of the positive electrode before and after the cycle was analyzed, and 20 $\mu$m in the depth direction from the surface of the active material layer and 200 $\mu$m in the plane direction were set as a reference region to obtain the area by dividing the crack area and the particle area in this region. The crack region is a part where particles are broken, and the particle region is a part where particles are not broken. An image was obtained by photographing the cross section of the electrode cut through an ion milling under conditions of an accelerated voltage of 5 kV, an emission current of 10 $\mu$A, a working distance of 10 mm, and a detector BED using a field emission scanning electron microscope (FESEM, JEOL JSM-IT800SHL).

For the FESEM cross-sectional image, the crack area and the particle area were quantified through an image analysis program based on digital transformation. In addition, in order to improve accuracy, 50 or more reference regions were designated for the positive electrode cross-section to obtain a crack area of each region, and an average value thereof.

[Table 2]

| | High-temperature performance | | Difference in crack area before/after deterioration (%) |
|---|---|---|---|
| | Capacity retention rate (%) | Resistance increase rate (%) | |
| Example 1 | 92.0 | 133 | 1.1 |
| Example 2 | 93.9 | 134 | 1.2 |
| Example 3 | 92.6 | 139 | 1.4 |
| Example 4 | 91.9 | 138 | 1.5 |
| Comparative Example 1 | 88.9 | 145 | 2.9 |
| Comparative Example 2 | 91.0 | 152 | 1.9 |
| Comparative Example 3 | 89.5 | 166 | 1.3 |
| Comparative Example 4 | 88.1 | 158 | 2.6 |

Referring to Table 3, when the shape of the primary particles is optimized as in Examples 1 to 4 according to one embodiment of the present invention, it can be confirmed that the lifespan characteristics are excellent due to low electrode degradation and high capacity retention rate under high temperature, and the output characteristics are excellent due to low resistance increase rate. However, when the aspect ratio of primary particles is small and the number of primary particles relative to the area of secondary particles is not large compared to the examples, as in Comparative Example 1, it can be confirmed that the breakage of active material particles or the occurrence rate of cracks is high, which can easily cause electrode degradation, and thus, the performance is poor. In addition, in the case of Comparative Example 2, although the aspect ratio is similar to the level of the Example, both the long diameter and the short diameter of the primary particle are larger than those of the Example, and the number is too small relative to the secondary particle area, so that the K value range is not satisfied, which means that the size of the primary particles themselves is large. In the case of having such a shape, it can be confirmed that the output characteristics are poor due to a large increase in resistance. In addition, Comparative Example 3 has a shape opposite to Comparative Example 2, and has a large aspect ratio, but has very small primary particles, and thus does not satisfy the K value. In this case, there is a problem that cracks are generated in the active material particles even during electrode rolling, and rather, the degree of deterioration between before and after the cycle is small, but shows very poor results in terms of lifespan and output characteristics. From this, it can be seen that the degree of particle breakage is large.

## Claims

1. A positive electrode active material including a lithium nickel-based transition metal oxide in the form of a secondary particle,

    which is an aggregate of primary particles, wherein the following conditions a) and b) are satisfied for a cross-section at 40% to 60% of the diameter of the secondary particle:

    a) a ratio of the number of primary particles having an aspect ratio of 1.6 or more in the above cross-section is 0.81 or more, and
    b) a K value calculated by the following Equation 1 is 12 to 40:

$$[Equation\ 1]$$

$$K = R_{AP} \times N_P / A_S$$

    wherein the $R_{AP}$ is an average aspect ratio of the primary particles, the $N_P$ is the number of primary particles, and the $A_S$ is an unitless number of the cross-sectional area ($\mu m^2$) of the secondary particle.

2. The positive electrode active material according to claim 1, wherein a ratio of the short diameter of the primary particles to the $D_{50}$ of the secondary particles is 0.025 or less.

3. The positive electrode active material according to claim 1, wherein a ratio of the long diameter of the primary particles to the $D_{50}$ of the secondary particles is 0.035 to 0.075.

4. The positive electrode active material according to claim 1, wherein an average aspect ratio of the primary particles in the secondary particle is 2.0 to 3.5.

5. The positive electrode active material according to claim 1, wherein the secondary particle has a $D_{50}$ of 7 $\mu$m to 20 $\mu$m.

6. The positive electrode active material according to claim 1, wherein the secondary particle has a crystal strain of 670 x $10^{-6}$ or less.

7. The positive electrode active material according to claim 6, wherein the secondary particle has a crystal strain of 645 x $10^{-6}$ or less.

8. The positive electrode active material according to claim 1, wherein the lithium nickel-based transition metal oxide is represented by the following chemical formula 1:

[Chemical Formula 1]    $Li_{1+x}Ni_aCo_bM^1_cM^2_dO_{2-e}X_e$

wherein $M^1$ includes one or more selected from Mn and Al; $M^2$ includes one or more selected from the group consisting of W, Zr, Y, Ba, Ca, Ti, V, Mg, Ta and Nb; X includes one or more selected from the group consisting of N, P, S, F and Cl; and $0 \leq x \leq 0.5$, $0.6 \leq a < 1$, $0 < b \leq 0.4$, $0 < c \leq 0.4$, $0 \leq d \leq 0.05$, and $0 \leq e \leq 0.05$.

9. The positive electrode active material according to claim 8, wherein Chemical Formula 1 has $0.75 \leq a \leq 0.99$.

10. A positive electrode including the positive electrode active material according to claim 1.

11. A lithium secondary battery comprising the positive electrode of claim 10.

[FIG. 1]

[FIG. 2]

[FIG. 3]

## INTERNATIONAL SEARCH REPORT

| International application No. |
|---|
| **PCT/KR2023/021495** |

**A. CLASSIFICATION OF SUBJECT MATTER**

**H01M 4/525**(2010.01)i; **H01M 4/505**(2010.01)i; **H01M 4/131**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/525(2010.01); C01G 53/00(2006.01); H01M 10/052(2010.01); H01M 4/485(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극(cathode), 양극 활물질(cathode active material), 2차 입자(secondary particle), 종횡비(aspect ratio), 단면적(cross-sectional area), 개수(number)

**C. DOCUMENTS CONSIDERED TO BE RELEVANT**

| Category* | Citation of document, with indication, where appropriate, of the relevant passages | Relevant to claim No. |
|---|---|---|
| Y | WO 2021-167409 A1 (BATTERY SOLUTION) 26 August 2021.<br>See claims 1, 8-9 and 14; paragraphs [0024], [0146], [0162], [0169]-[0171] and [0398]; and table 14. | 1-11 |
| Y | KR 10-2021-0097059 A (LG CHEM, LTD.) 06 August 2021 (2021-08-06)<br>See claims 1 and 5. | 1-11 |
| A | KR 10-2022-0116105 A (ECOPRO BM CO., LTD.) 22 August 2022 (2022-08-22)<br>See entire document. | 1-11 |
| A | JP 2019-167291 A (SUMITOMO CHEMICAL CO., LTD. et al.) 03 October 2019 (2019-10-03)<br>See entire document. | 1-11 |
| A | KR 10-2194504 B1 (IUCF-HYU (INDUSTRY-UNIVERSITY COOPERATION FOUNDATION HANYANG UNIVERSITY)) 23 December 2020 (2020-12-23)<br>See entire document. | 1-11 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 April 2024** | **09 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/021495**

| Patent document cited in search report | | | Publication date (day/month/year) | Patent family member(s) | | | Publication date (day/month/year) |
|---|---|---|---|---|---|---|---|
| WO | 2021-167409 | A1 | 26 August 2021 | CN | 115152054 | A | 04 October 2022 |
| | | | | EP | 4084139 | A1 | 02 November 2022 |
| | | | | EP | 4084139 | A4 | 06 March 2024 |
| | | | | US | 2023-0065977 | A1 | 02 March 2023 |
| KR | 10-2021-0097059 | A | 06 August 2021 | CN | 115004416 | A | 02 September 2022 |
| | | | | EP | 4084146 | A1 | 02 November 2022 |
| | | | | EP | 4084146 | A4 | 12 July 2023 |
| | | | | JP | 2023-513029 | A | 30 March 2023 |
| | | | | KR | 10-2595884 | B1 | 01 November 2023 |
| | | | | US | 2023-0087740 | A1 | 23 March 2023 |
| | | | | WO | 2021-154026 | A1 | 05 August 2021 |
| KR | 10-2022-0116105 | A | 22 August 2022 | CN | 112886001 | A | 01 June 2021 |
| | | | | EP | 3828139 | A1 | 02 June 2021 |
| | | | | JP | 2021-086830 | A | 03 June 2021 |
| | | | | JP | 2022-122997 | A | 23 August 2022 |
| | | | | JP | 7089002 | B2 | 21 June 2022 |
| | | | | KR | 10-2550729 | B1 | 03 July 2023 |
| | | | | US | 11588154 | B2 | 21 February 2023 |
| | | | | US | 11837725 | B2 | 05 December 2023 |
| | | | | US | 2021-0167380 | A1 | 03 June 2021 |
| | | | | US | 2023-0163297 | A1 | 25 May 2023 |
| | | | | US | 2024-0038988 | A1 | 01 February 2024 |
| JP | 2019-167291 | A | 03 October 2019 | None | | | |
| KR | 10-2194504 | B1 | 23 December 2020 | KR | 10-2019-0008156 | A | 23 January 2019 |
| | | | | WO | 2019-013605 | A1 | 17 January 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220184868